# FASCICULE DE BREVET EUROPEEN

(11) **EP 3 870 893 B1**
(45) Date de publication et mention de la délivrance du brevet: **14.12.2022**
(21) Numéro de dépôt: 19816204.2
(22) Date de dépôt: 15.10.2019
(51) Int. Cl.: F21S 41/141, F21S 41/24, F21S 41/265, F21S 41/663, F21S 43/14, F21S 43/237, F21S 43/243, F21S 43/249, F21S 41/151

(54) **MODULE LUMINEUX POUR DISPOSITIF D'ECLAIRAGE DE VEHICULE**
LEUCHTMODUL FÜR FAHRZEUGBELEUCHTUNGSVORRICHTUNG
LUMINOUS MODULE FOR VEHICLE LIGHTING DEVICE

(30) Priorité: 25.10.2018 FR 1859869
(43) Date de publication de la demande: 01.09.2021
(73) Titulaire: Valeo Vision, 93012 Bobigny Cedex (FR)
(72) Inventeur: MARCHAL, Orane, 93012 BOBIGNY Cedex (FR)
(74) Mandataire: Valeo Visibility
(86) Numéro de dépôt international: PCT/EP2019/077969
(87) Numéro de publication internationale: WO 2020/083711

(56) Documents cités:
- EP-A1- 2 743 567
- EP-A2- 2 306 073
- EP-A2- 2 306 074

## Description

La présente invention se rapporte au domaine de l'éclairage pour véhicule automobile. Plus particulièrement, la présente invention a trait à un module lumineux agencé de manière à réduire les rayons lumineux parasites et/ou à empêcher la formation de l'image desdits rayons parasites.

De manière connue, il existe des modules lumineux aptes à générer un faisceau pixélisé dont la projection forme une image composée d'unités d'illumination, encore appelées « pixels » en anglais. Lesdites unités sont organisées en au moins une rangée horizontale et/ou verticale et chacune des unités d'illumination peut être activée sélectivement (voir par exemple le document EP 2306073 A.

Un tel module optique est utilisé par exemple en complément avec un deuxième module optique apte à générer un faisceau d'éclairage et/ou de signalisation principal pour former un faisceau d'éclairage et/ou de signalisation intégrant une ou plusieurs fonctions adaptatives.

Alternativement, le module optique apte à générer un faisceau pixélisé est conçu de manière à réaliser à lui seul un faisceau d'éclairage et/ou de signalisation.

Les fonctions adaptatives sont regroupées sous le nom d'AFS, l'abréviation pour « Advanced Front System » en anglais. A titre d'exemple, dans le cas d'un feu de croisement, le faisceau pixélisé est éclairé avec une portion basse du faisceau de croisement pour réaliser une fonction d'éclairage supplémentaire, à savoir une fonction de suivi de virage, dite DBL- « Dynamic Bending Light » en anglais. Cette fonction permet d'éclairer vers l'intérieur du virage que le véhicule prend ou s'apprête à prendre.

Dans une autre application, le faisceau pixélisé est éclairé avec une portion de faisceau route afin de réaliser une fonction route adaptative, dite ADB, pour « Adaptative Driving Beam » en anglais, ayant pour but d'offrir une meilleure visibilité au conducteur du véhicule tout en évitant d'éblouir le conducteur d'un véhicule venant en face.

De façon simplifiée, le module optique apte à générer un faisceau pixélisé comprend une pluralité de sources lumineuses élémentaires activables sélectivement et réunies dans une matrice de sources lumineuses élémentaires, une pluralité de guides de lumière placés devant ladite matrice, et un ensemble d'optique de projection imageant la sortie des guides de lumière.

Cependant, on s'est aperçu que certaines configurations du module lumineux occasionnent la présence des rayons lumineux parasites.

Les guides de lumière sont agencés globalement selon des directions parallèles. Alternativement, les guides de lumière peuvent être répartis en éventail ou selon un demi-cercle, chacun des axes optiques des guides de lumière étant orientés vers l'axe optique du module.

Quelle que soit la disposition des guides optiques, ces derniers comportent chacun un dioptre d'entrée et une sortie. Les sources lumineuses élémentaires peuvent être des diodes électroluminescentes, encore communément appelées LED (appellation la plus courante et issue de l'anglais pour « *Light Emitting Diode »*).

Les sources lumineuses sont placées en vis-à-vis des dioptres d'entrée de tout ou partie des guides de lumière. Autrement dit, en fonction de la forme du faisceau lumineux souhaité, le nombre de sources lumineuses peut être inférieur au nombre de guides de lumière.

Dans le cas où les sources lumineuses sont des LED, il arrive parfois que l'angle solide du faisceau émis par au moins une des LED intercepte une surface plus large que la surface du dioptre d'entrée situé en face. Par conséquent, une minorité de rayons lumineux ne sont pas collectés par ledit dioptre d'entrée et se propagent latéralement, puis entrent par réfraction dans d'autres guides de lumière qui ne leur sont pas destinés. Ces rayons lumineux se propagent ensuite à l'intérieur de ces guides en direction de l'ensemble d'optique de projection.

On reconnaît les rayons parasites sur l'image projetée par le module optique, ici un faisceau lumineux comprenant un faisceau principal réalisant la fonction optique recherchée. En effet, les rayons parasites sont repérés sous forme de surintensités lumineuses dans le faisceau principal ou des tâches lumineuses hors du faisceau principal. La présence des surintensités lumineuses ou des tâches lumineuses dégrade la qualité du faisceau.

Le problème technique que vise à résoudre l'invention est donc de fournir un faisceau pixélisé avec une meilleure qualité d'éclairage.

A cet effet, un premier objet de l'invention est un module lumineux de véhicule, tel que défini dans la revendication 1, destiné à générer un faisceau lumineux suivant un axe optique, comprenant :
- des guides de lumière primaires comprenant chacun un dioptre d'entrée et une sortie ;
- une source lumineuse agencée en vis-à-vis d'un dioptre d'entrée;
- un ensemble de projection comprenant une zone focale et un organe de sortie, ledit ensemble de protection étant agencé de manière à ce que les rayons lumineux passant par ladite zone focale et atteignant l'organe de sortie soient imagés dans un champ de projection en aval dudit ensemble de projection ;
- les sorties des guides étant agencées au niveau de la zone focale.

Selon l'invention, le module lumineux comprend un guide de lumière secondaire distinct des guides de lumière primaires, et agencé de manière à dévier des rayons lumineux issus de la source lumineuse de manière à ce qu'ils n'atteignent pas l'organe de sortie, et/ou de manière à étaler lesdits rayons lumineux dans ledit champ de projection.

Dans le contexte de l'invention, on entend par « au niveau de » un emplacement qui inclut « exactement sur » ou « légèrement à côté » mais suffisamment proche pour former une image de ces sorties de guides. Ici, lorsque les sorties des guides sont situées au niveau de la zone focale, lesdites sorties sont placées légèrement à côté ou exactement sur la zone focale de manière à être imagées par l'ensemble de projection du module lumineux.

Ici, on entend par zone focale une surface de meilleurs foyers objet. Il s'agit de la surface disposée au plus proche d'un ensemble de points de foyer objet.

En outre, on entend par champ de projection l'ensemble de l'espace dans lequel le système de projection projette l'image.

L'organe de sortie peut être le dioptre de sortie de la pièce optique la plus en aval du système de projection, ou pièce optique terminale. Par exemple, si cette pièce optique terminale est une lentille, notamment une lentille secondaire, l'organe de sortie est le dioptre de sortie de cette lentille. Si cette pièce optique terminale est un réflecteur, l'organe de sortie est la surface réfléchissante de ce réflecteur.

Les rayons déviés par le ou les guides de lumières secondaires n'atteignent donc pas l'organe de sortie, en particulier ils peuvent être arrêtés lors de leur parcours par une surface absorbante vers laquelle le ou les guides secondaires les dévient ou bien être déviés par le ou les guides secondaires de manière à suivre un chemin, direct ou indirect, qui passe à l'écart de l'organe de sortie.

Ainsi, grâce au(x) guide(s) de lumière secondaire(s), les rayons lumineux déviés ne sont pas imagés sur le champ de projection. Ainsi, les rayons déviés ne sont donc pas projetés, et n'apparaissent pas dans le champ de projection. Les rayons déviés sont des rayons parasites se propageant dans des guides qui ne leur sont pas destinés.

De manière alternative ou complémentaire, le ou les guides de lumière secondaires réfléchissent des rayons lumineux parasites de sorte qu'ils arrivent à la zone focale en étant très espacés les uns des autres. En effet, en sortant du ou des guides de lumière secondaires, ce faisceau de rayons parasites est éclaté de façon que les rayons parasites soient divergents et très espacés les uns des autres en arrivant sur la zone focale. Par conséquent, l'image de ces rayons parasites est étalée dans le champ de projection, ce qui diminue de manière considérable l'intensité de l'image des rayons parasites.

Ainsi, grâce aux guides de lumière secondaires, on diminue le risque d'amener un surplus de l'intensité lumineuse dans le faisceau principal et/ou des tâches lumineuses en dehors du faisceau principal. Le module lumineux selon l'invention génère donc un faisceau lumineux de bonne qualité, net et précis.

Par ailleurs, le module lumineux selon l'invention permet de diminuer le risque d'éblouissement d'un conducteur venant de face.

Le module lumineux selon l'invention peut optionnellement présenter une ou plusieurs caractéristiques suivantes :
- le module lumineux comprend plusieurs guides de lumière secondaires ;
- chaque guide de lumière secondaire comprend une extrémité libre en regard de laquelle aucune source lumineuse n'est disposée ;
- le module lumineux est agencé de manière à ce que l'image des sorties des guides primaires associée à la source lumineuse forme une bande lumineuse dans le champ de projection, ladite bande lumineuse formant une portion d'un faisceau d'éclairage ; à titre d'exemple, la bande lumineux forme une portion d'un faisceau d'éclairage contenant plusieurs unités d'illumination, ou pixels, qui peuvent être éteintes ou éclairées sélectivement et indépendamment des unes des autres ; dans un exemple, ladite portion est appelée première portion de faisceau d'éclairage ; en outre, le module lumineux selon l'invention peut être conçu de manière à générer une deuxième portion de faisceau d'éclairage complémentaire à la première portion pour réaliser un faisceau d'éclairage complet dont une partie peut être éteinte ou éclairée indépendamment de l'autre partie ;
- alternativement, le module lumineux selon l'invention peut être allumé en conjonction avec d'autres modules lumineux pour réaliser un faisceau d'éclairage ; grâce à la qualité du module lumineux selon l'invention, le faisceau d'éclairage complet présente également une qualité améliorée, qui procure une meilleure visibilité au conducteur ;
- les guides de lumière primaires et le ou les guides de lumière secondaires sont disposés dans une même rangée horizontale ; le ou au moins un des guides de lumière secondaires, dit premier guide de lumière secondaire, est placé entre deux guides de lumière primaires ; le premier guide de lumière secondaire, ainsi placé, peut recevoir les rayons de lumière parasites provenant de ses deux côtés, notamment provenant du guide de lumière primaire situé à gauche et/ou du guide de lumière primaire situé à droite ;
- les guides de lumière primaires et le ou les guides de lumière secondaires sont disposées dans une même rangée horizontale ;
- le ou au moins un des guides de lumière secondaires, dit deuxième guide de lumière secondaire, est placé à une extrémité de ladite rangée horizontale ; ainsi, le deuxième guide de lumière secondaire peut intercepter les rayons lumineux parasites qui s'échappent latéralement vers les côtés du module lumineux ;
- au moins un guide de lumière secondaire s'étend longitudinalement selon un premier axe sensiblement parallèle à l'axe optique du module ;
- au moins un guide de lumière secondaire comprend des faces latérales légèrement courbées vers l'intérieur en direction du premier axe ; ainsi, les faces latérales courbées participent à réfracter des rayons parasites entrant à l'intérieur du ou des guides secondaires de manière à dévier le trajet de ces rayons parasites et/ou à étaler l'image de ces rayons sur le champ de projection ;
- au moins un guide de lumière secondaire comprend deux faces latérales opposées et concaves, vu de l'extérieure dudit premier guide ; il s'agit d'un mode de réalisation simple et efficace des guides de lumière secondaires ;
- au moins un guide de lumière secondaire comprend des faces latérales planes ; ainsi, les faces planes du guide secondaire renvoient les rayons parasites du côté d'où ils proviennent, au lieu de permettre aux rayons parasites de continuer à se propager, dans le but d'atteindre la zone focale de l'ensemble de projection ;
- alternativement, on peut avoir une combinaison des faces latérales de formes différentes sur un même guide secondaire ; par exemple, un guide secondaire comprend une face latérale plane et une face latérale concave, ou une face latérale plane et une face latérale convexe, ou une face latérale concave et une face latérale convexe ;
- au moins un guide de lumière secondaire comprend une première entrée comportant une extrémité libre agencée sensiblement dans un même plan qu'au moins certains dioptres d'entrée des guides de lumière primaires ; le guide de lumière secondaire, ainsi conçu, peut être moulé en même temps que les guides de lumière primaire sans avoir besoin d'un tiroir de démoulage spécifique audit guide de lumière secondaire ; cela simplifie donc le procédé de fabrication du module optique ;
- au moins un guide de lumière secondaire comprend une extrémité libre agencée de manière décalée longitudinalement par rapport à au moins certains des dioptres d'entrée des guides de lumière primaires ;
- dans certaines configuration du module optique, le ou les guides secondaires ne reçoivent pas de rayons lumineux parasites à dévier ou à étaler dans la portion située légèrement devant ou au même niveau des dioptres d'entrée des guides de lumière primaires ; par conséquent, il serait donc inutile de le ou les prolonger jusqu'au même niveau que lesdits dioptres d'entrée ; le ou les guides secondaires sont donc plus courts et consomment moins de matière pour leur fabrication ; le module lumineux comprenant le ou les guides secondaires courts est moins lourd et coûte donc moins cher ;
- selon l'alinéa précédent et de manière alternative, le ou les guides secondaires sont plus longs que les guides primaires ; dans ce cas, l'extrémité libre du ou des guides secondaires peut être utilisée comme un organe de positionnement et/ou de fixation pour positionner l'ensemble des guides par rapport à un support et/ou pour fixer l'ensemble des guides audit support ;
- l'ensemble de projection comprend une lentille primaire et une lentille secondaire disposée à distance et en aval de ladite lentille primaire, la lentille primaire recevant les rayons sortant des sorties des guides de lumière primaires et les rayons sortant de la sortie du guide de lumière secondaire ou sortant ou sortant des sorties des guides de lumière secondaires et les envoyant vers la lentille secondaire; en d'autres termes, la lentille primaire et la lentille secondaire formant l'ensemble de projection convergeant au niveau de la zone focale ; alternativement, l'ensemble de projection peut comprendre plus de deux lentilles ;
- la lentille primaire, les guides de lumière primaire et le ou les guides de lumière secondaires sont venus de matière de manière à former une pièce optique monobloc ; ainsi, cela permet de réduire le nombre de composants distincts du module lumineux et de simplifier le montage dudit module ainsi que la robustesse aux tolérances de positionnement;
- l'ensemble de projection est composé d'une seule lentille convergeant au niveau de la zone focale de manière à imager les sorties des guides de lumière primaires ; l'ensemble de projection, les guides de lumière primaires et le ou les guides de lumière secondaires sont venus de matière en une seule pièce; ainsi, le module lumineux comprend une pièce optique monobloc multifonctionnelle, compacte et facile à monter ;
- le module lumineux comprend plusieurs sources lumineuses, lesdites sources lumineuses étant agencées en vis-à-vis des dioptres d'entrée de tout ou partie des guides de lumière primaires ; ainsi, le module lumineux peut être adapté en fonction des besoins du cahier de charges.

L'invention a également pour objet un dispositif d'éclairage comprenant un module lumineux selon l'invention.

Dans ce document, sauf indication contraire, les termes « amont » et « aval » se réfèrent au sens de propagation de la lumière dans l'objet auquel ils se réfèrent et également au sens d'émission de lumière en dehors dudit objet.

Par ailleurs, tout ce qui est dénommé « avant » se trouve du côté aval tandis que tout ce qui est dénommé « arrière » se trouve du côté amont.

Les termes « horizontal », « vertical » ou « transversal », « inférieur », « supérieur », « haut », « bas », « côté » sont définis par rapport à l'orientation du module lumineux ou une pièce faisant partie du module lumineux selon l'invention dans laquelle elle est destinée à être montée dans le véhicule. En particulier, dans cette demande, le terme « vertical » désigne une orientation perpendiculaire à l'horizon tandis que le terme « horizontal » désigne une orientation parallèle à l'horizon.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 illustre une vue en perspective selon une direction de l'amont vers l'aval d'un module lumineux selon un exemple de réalisation de l'invention;
- la figure 2 illustre une vue de dessus d'une pièce optique comprenant des guides de lumière et une lentille primaire, ladite pièce optique faisant partie du module lumineux de la figure 1;
- la figure 3 illustre une vue schématique d'une coupe horizontale de la pièce optique de la figure 2 ;
- la figure 4 illustre une vue en perspective selon une direction de l'amont vers l'aval de la pièce optique de la figure 2 ;
- la figure 5 illustre une partie arrière d'une pièce optique de l'état de l'art, semblable à la pièce optique de la figure 2, mais comportant uniquement des guides de lumière primaires ; la figure 5 illustre également, de manière schématique, des tracés de rayons de lumière émis par deux sources lumineuses élémentaires ;
- la figure 5A illustre l'image comprenant une bande lumineuse générée par un module lumineux comportant la pièce optique de la figure 5, ainsi qu'une première zone d'image des rayons lumineux parasites ; ladite image est sous forme de courbes isolux projetée sur un écran vertical, notamment à une distance de 25 mètres au-devant d'un module lumineux portant la pièce optique de la figure 5 ;
- la figure 5B illustre la même image avec les bandes lumineuses que la figure 5A et montrant une deuxième zone d'image des rayons lumineux parasites ;
- la figure 6 illustre une partie arrière de la pièce optique de la figure 2 ainsi que des faisceaux de lumière émis par deux sources lumineuses élémentaires ;
- la figure 6A illustre l'image comprenant une bande lumineuse générée par le module lumineux de la figure 1, à savoir le module lumineux comportant la pièce optique de la figure 2, ainsi qu'une première zone d'image des rayons lumineux parasites ; ladite image est sous forme de courbes isolux projetée sur un écran vertical, notamment à une distance de 25 mètres au-devant du module lumineux de la figure 1 ;
- la figure 6B illustre la même image avec les bandes lumineuses que la figure 6B et montrant une deuxième zone d'image des rayons lumineux parasites.

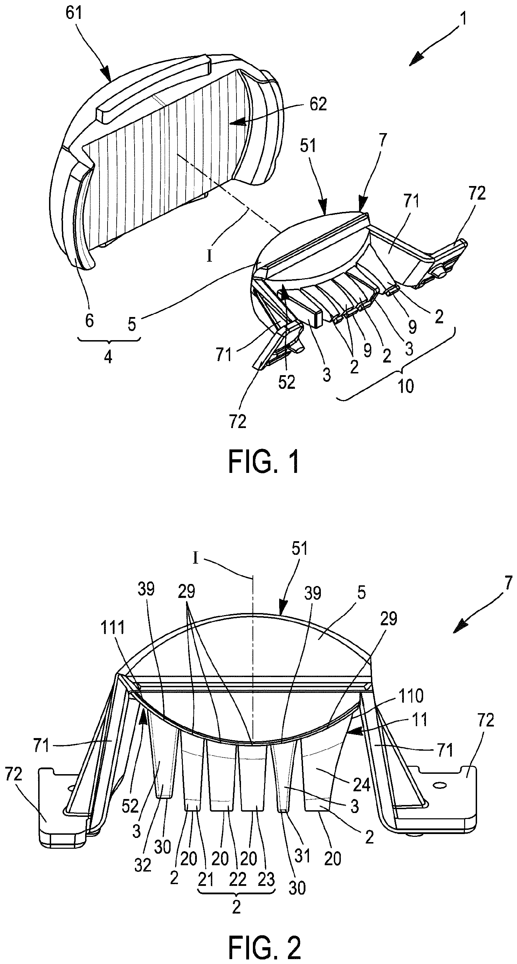

En référence à la figure 1 et à la figure 2, un module lumineux 1 selon un exemple de réalisation de l'invention est destiné à générer un faisceau lumineux dans la direction d'un axe optique I. Le module lumineux 1 comprend une pluralité 10 de guides de lumière, une lentille primaire 5 et une lentille secondaire 6.

Les guides de lumière 10 se divisent en deux catégories, dont les guides de lumière primaires 2 et les guides de lumière secondaires 3. Les guides de lumière primaires 2 sont destinés à conformer un faisceau lumineux émis par au moins une source lumineuse en un pinceau de lumière en sortant de ces guides de lumière primaires 2. Chaque guide de lumière primaire 2 comprend un dioptre d'entrée 20 et une sortie 29.

Dans l'exemple illustré, une source lumineuse 9, notamment une diode électroluminescente 9, est placée en face de chaque dioptre d'entrée 20. Donc, ici, le nombre de diodes est égal au nombre de guides de lumière primaires. Dans un autre exemple, le nombre de diodes peut être inférieur au nombre de guides de lumière primaires.

Les guides de lumière secondaires 3 sont uniquement conçus pour réfracter et dévier des rayons lumineux parasites. On entend par rayons lumineux parasites des rayons issus d'une source lumineuse disposée en amont d'un guide de lumière primaire 2, mais qui ne rentrent pas dans ledit guide de lumière primaire 2, ou qui en sortent par une des faces latérales avant d'avoir atteint la sortie de ce guide primaire 2. Les guides de lumière secondaires 3 comprennent chacun une sortie 39 et une extrémité libre 30. Aucune source lumineuse n'est disposée en regard de l'extrémité libre 30 de chacun des guides de lumière secondaires 3. Ces guides de lumière secondaires 3 seront décrits en détail plus loin dans la description.

Dans la suite de la description, afin de faciliter la lecture, les termes « guides de lumière primaires », « guides de lumière secondaires », « rayons lumineux parasites », « faisceau lumineux » sont appelés respectivement « guides primaires », « guides secondaires », « rayons parasites » et « faisceau ».

Dans l'exemple illustré, la lentille primaire 5 est une lentille biconvexe comportant, ici, à l'avant, une face aval principale 51 et, ici, à l'arrière, une face amont principale 52. L'ensemble de guides de lumière secondaires et primaires est saillant vers l'amont depuis cette face amont principale 52.

La lentille secondaire 6 est placée à distance et en aval de la lentille primaire 5 de manière à recevoir les rayons sortant de la face aval principale 51 de ladite lentille primaire 5. La lentille secondaire 6 comporte ici, à l'avant, une face aval secondaire 61, et à l'arrière, une face amont secondaire 62. Sur la figure 1, la face amont secondaire 62 est représentée plane, mais elle peut être légèrement convexe, vu de l'extérieure de la lentille 6.

La lentille primaire 5 et la lentille secondaire 6 sont agencées de façon à former un ensemble de projection 4 présentant une zone focale F au niveau de, voire épousant, la face amont principale 52 de la lentille primaire 5. De cette manière, les rayons lumineux en sorties des guides primaires et/ou secondaires sont imagés par l'ensemble de projection 4 tout en minimisant des aberrations optiques de champs.

En référence à la figure 2, six guides de lumière, dont quatre guides primaires 2 et deux guides secondaires 3, sont illustrés. Tous les guides sont disposés en une rangée horizontale 11.

Trois guides primaires 2 sont placés côte à côte et sont appelés respectivement, dans l'ordre de gauche à droite de la figure 2, le premier, deuxième, et troisième guide primaire 21, 22 et 23. Le quatrième guide primaire 24 est placé à une extrémité droite 110 de la rangée horizontale 11. Chacun des guides primaires 2 comprend un dioptre d'entrée 20 et une sortie 29. Une source lumineuse élémentaire 9, ici une diode électroluminescente ou LED, est placée devant chaque dioptre d'entrée 20.

Un premier guide secondaire 31 est placé entre le troisième et le quatrième guide primaire, 23 et 24. Un deuxième guide secondaire 32 est placé à une extrémité gauche 111 de la rangée horizontale 11. Chacun des guides secondaires 3 comprend ici, à l'avant, une sortie 39, et ici, à l'arrière, une extrémité libre 30.

Comme décrit précédemment, les sorties des guides primaires et secondaires 20 et 30 sont agencées sur la face amont principale 52 de la lentille primaire 5. L'ensemble de projection 4 est configuré de manière à ce que la zone focale F passe par cette face amont principale 52 de la lentille primaire 5 pour projeter vers l'infini tout rayon sortant des guides primaires et secondaires 2 et 3 via leur sortie 29, 39.

Par conséquent, la lentille primaire 5 reçoit les rayons sortant des sorties des guides primaires 2 et les rayons sortant des guides secondaires 3. La lentille primaire 5 les envoie ensuite vers la lentille secondaire 6.

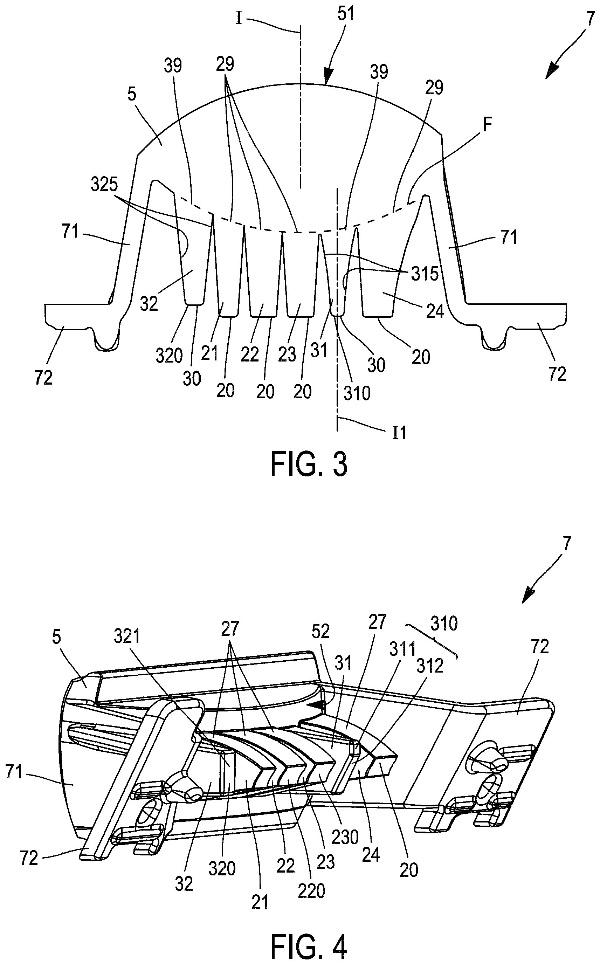

Ici, la zone focale F présente une surface courbe passant par les sorties 29 des guides primaires 2 et les sorties 39 de guides secondaires 3. La zone focale F est illustrée à la figure 3.

Dans cet exemple, les six guides de lumière 21 à 24, 31, 32 et la lentille primaire 5 sont formés en une seule pièce optique 7 monobloc.

Cette pièce optique 7 monobloc comprend des ailettes latérales 71 comportant chacune un pied d'accroché 72. Ce dernier est destiné à être apposé sur un support (non illustré sur les figures). Les pieds d'accroché 72 sont fixés, notamment par vissage, au support pour maintenir la position de la pièce optique 7 monobloc dans le module lumineux 1.

Sur la figure 3, une coupe horizontale de la pièce optique 7 monobloc est illustrée. On y voit donc la coupe horizontale des guides primaires 21 à 24 et secondaires 31, 32.

En particulier, le premier guide secondaire 31 s'étend longitudinalement en parallèle à l'axe optique du module lumineux. L'axe longitudinal du premier guide secondaire 31 est appelé le premier axe I1. Le premier guide secondaire 31 comprend deux faces latérales 315 qui sont légèrement courbées vers l'intérieur en direction du premier axe I1. En d'autres termes, les faces latérales 315 du premier guide secondaire 31 sont les faces concaves, vu de l'extérieur dudit premier guide 31. En d'autres termes, les faces latérales 315 du premier guide secondaire 31 sont convexes vues depuis l'intérieur du guide secondaire 31, c'est à dire en considérant le parcours des rayons lumineux se propageant à l'intérieur dudit premier guide secondaire 31.

Dans cet exemple, l'extrémité libre 310 du premier guide secondaire 31 est sensiblement coplanaire avec des dioptres d'entrée 20 des guides primaires 2.

Quant au deuxième guide secondaire 32, celui-ci comprend des faces latérales 325 planes. En outre, l'extrémité libre 320 du deuxième guide secondaire 32 se trouve décalée longitudinalement vers l'aval par rapport aux dioptres d'entrée 20 des guides primaires 2.

Ici, la longueur des deux guides secondaires 3 et la forme de toutes leurs faces, en particulier leurs faces latérales, sont définies de manière à intercepter et dévier les rayons créant la lumière parasite. On pourrait donc avoir une forme différente que celle présentée dans les figures. En particulier, les formes qui s'appliquent au premier guide secondaire peuvent aussi s'appliquer au deuxième guide secondaire. Inversement, les formes s'appliquent au deuxième guide secondaire peuvent aussi s'appliquer au premier guide secondaire.

La figure 4 montre l'arrière des guides primaires 2 et secondaires 3. Ici, les guides primaires 2 présentent chacun une face supérieure 27 légèrement courbée vers le bas. Le dioptre d'entrée 20 de chacun de ces guides 2 présente, ici, une surface courbée et légèrement inclinée par rapport à la verticale.

En ce qui concerne le premier guide secondaire 31, dans cet exemple, l'extrémité libre 310 dudit premier guide 31 est composée de plusieurs facettes, ici au nombre de deux, dont une facette supérieure 311 et une facette inférieure 312. La facette inférieure 312 de l'extrémité libre 310 se trouve sensiblement dans le même plan que les dioptres d'entrée 20 des guides primaires 2. La facette inférieure 312 est donc aussi légèrement inclinée par rapport à la verticale.

A la différence du premier guide secondaire 31, l'extrémité libre 320 du deuxième guide secondaire 32 comprend une seule facette 321 et qui est parallèle à la direction verticale. Le deuxième guide secondaire 32 présente donc la forme d'une pyramide tronquée avec la sortie assimilée à la grande base et l'extrémité libre la petite base.

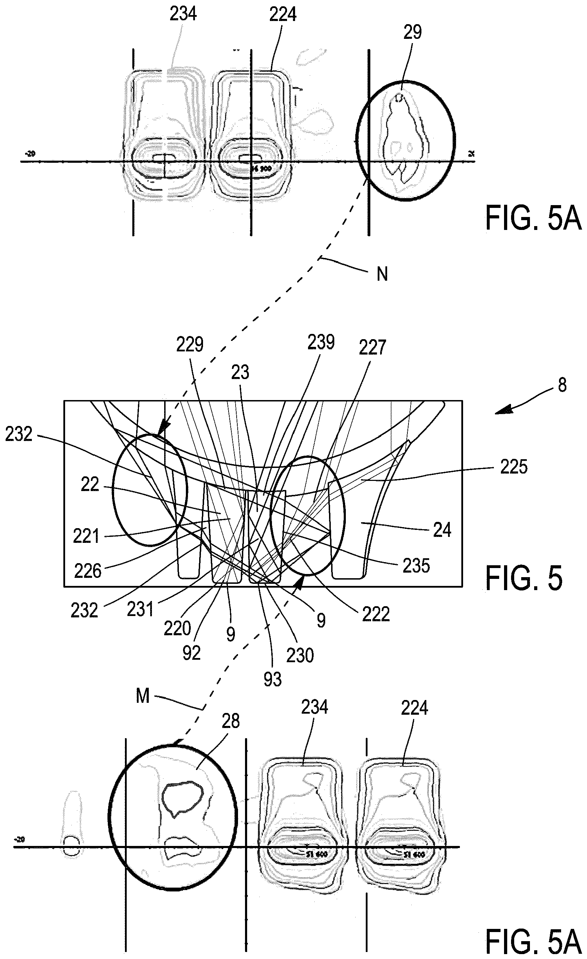

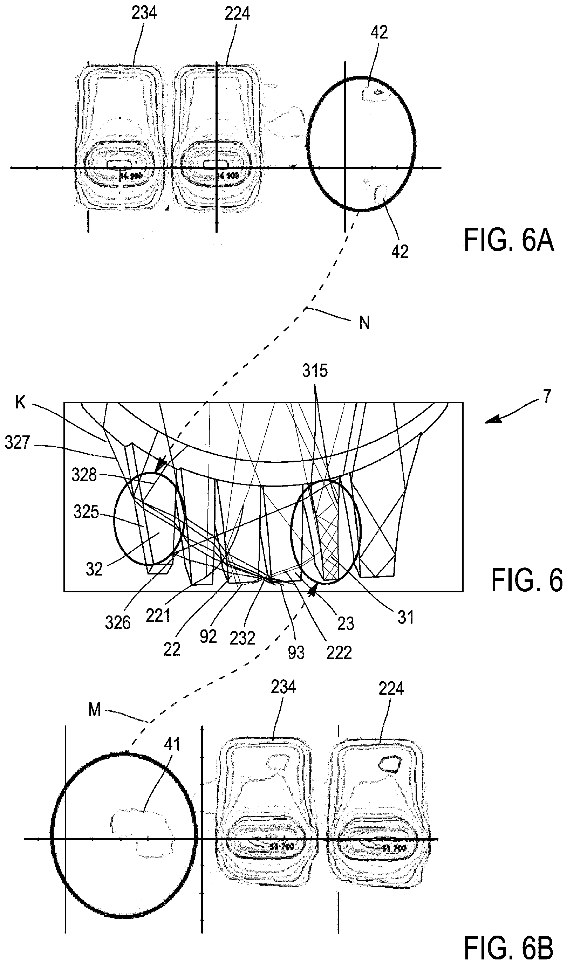

Les figures 5, 5A, 5B, 6, 6A et 6B décrites ci-après expliquent davantage le fonctionnement et l'avantage technique des guides secondaires 31, 32 dans le module lumineux 1 selon un exemple de réalisation de l'invention par rapport à un module lumineux sans les guides secondaires.

En référence à la figure 5, il est illustré une pièce optique 8 semblable à la pièce optique 7 représentée à la figure 2 et à la figure 6. Toutefois, la pièce optique 8 de figure 5, dite pièce optique 8 de comparaison, ne comporte pas de guides secondaires. Elle ne comprend que des guides primaires qui sont, en revanche, au même nombre et dans la même disposition que ceux de la figure 2. Les guides primaires de la pièce optique 8 de comparaison portent donc les mêmes références que ceux des guides primaires de la pièce optique 7 représentée à la figure 2 et à la figure 6.

Deux sources lumineuses élémentaires, ici deux LED, sont mises respectivement devant le deuxième guide primaire et le troisième guide primaire. La LED 92 placée en face du dioptre d'entrée 220 du deuxième guide primaire 22 est ci-après appelée la deuxième LED 92, tandis que la LED 93 placée en face du dioptre d'entrée 230 du troisième guide primaire 23 est appelée la troisième LED 93.

Sur la figure 5, il est également illustré des faisceaux émis par ces deux LED 92 et 93.

Précisément, la deuxième LED 92 émet un faisceau dont une partie principale contenant la majorité des rayons de ce faisceau se propage à l'intérieur du deuxième guide primaire 22. Cette partie principale de faisceau est ci-après appelé deuxième faisceau primaire 221. Ce deuxième faisceau primaire 221 se propage dans le deuxième guide primaire 22 jusqu'à atteindre la sortie 229 dudit guide 22, et puis la zone focale F. Le deuxième faisceau primaire 221 est ainsi imagé par l'ensemble de projection 4.

L'image du deuxième faisceau primaire 221 est une unité d'illumination 224 présentant une forme légèrement rectangulaire. Cette unité d'illumination 224 est appelée deuxième unité d'illumination 224 et est illustrée sur la figure 5A ainsi que sur la figure 5B.

On notera que l'image des sorties de guides de lumière 2, 3 est inversée par rapport à leur disposition structurelle. En effet, l'image des faisceaux issus du deuxième guide primaire 22 est située à droite sur les figures 5A, 5B tandis que l'image des faisceaux issus du troisième guide primaire 23 est située à gauche des figures 5A, 5B. Or, structurellement, le deuxième guide primaire 22 se trouve à gauche du troisième guide primaire 23, par rapport au sens d'émission de la lumière.

Par conséquent, l'image du deuxième faisceau primaire 221, qui est ici la deuxième unité d'illumination 224, est l'unité située à droite de la figure 5A et de la figure 5B.

Le faisceau émis par la deuxième LED 92 comprend encore une autre partie de faisceau, dite deuxième faisceau secondaire 222. A la différence du deuxième faisceau primaire 221, le deuxième faisceau secondaire 222 ne rentre pas dans le deuxième guide primaire 22 et part vers la droite par rapport au sens d'émission de la lumière, qui est, ici, également la droite de la figure 5. Le deuxième faisceau secondaire 222 traverse par réfraction latéralement le troisième guide primaire 23. Il sort ensuite du troisième guide primaire 23 par le bord latéral droit 235 de celui-ci et se divise en deux parties.

Une première partie 227 du deuxième faisceau secondaire 222 atteint la zone focale F. Une deuxième partie 225 du deuxième faisceau secondaire 222 entre par réfraction dans le quatrième guide primaire 24 avant d'arriver au niveau de la zone focale F.

Par conséquent, la première et la deuxième partie 227 et 225 du deuxième faisceau secondaire 222 sont également imagées par l'ensemble de projection 4.

L'image de la première partie 227 du deuxième faisceau secondaire 222 est illustrée sur la figure 5B. Il s'agit d'une tâche de lumière 28 avec une forme irrégulière. Autrement dit, cette tâche 28 forme une image parasite sur l'image du faisceau généré par le module lumineux. Afin de faciliter la lecture des figures, une flèche en pointillée M est présentée pour montrer la correspondance entre le deuxième faisceau secondaire 222, ou plus précisément, la première partie 227 de celui-ci, et son image sur écran-la figure 5B. La tâche 28 est située, ici, à gauche des deuxième et troisième unités d'illumination 224, 234 sur la figure 5B.

De la même manière, l'image de la deuxième partie 225 du deuxième faisceau secondaire 222 va former une image parasite sur l'image du faisceau généré par le module lumineux.

Ainsi, le deuxième faisceau secondaire 222 est un faisceau de rayons lumineux parasites.

Le même phénomène se produit avec le troisième guide de lumière primaire 23 et la troisième LED 93.

Comme illustré sur la figure 5, la troisième LED 93 émet un faisceau dont une partie principale contenant la majorité des rayons du faisceau se propage tout le long du troisième guide primaire 23 pour atteindre ensuite la sortie 239, puis être projeté vers l'aval par l'ensemble de projection 4. Cette partie principale de ce faisceau est appelé ci-après le troisième faisceau primaire 231.

L'image du troisième faisceau primaire 231 est une unité d'illumination 234 située à gauche sur les figures 5A et 5B. Cette unité est encore appelée troisième unité d'illumination 234. Cette dernière présente une forme similaire à la deuxième unité d'illumination 224, à savoir une forme sensiblement rectangulaire.

Ainsi, la deuxième unité d'illumination 224 et la troisième unité d'illumination 234, disposées côte à côte, forment une partie d'une bande lumineuse que le module lumineux 1 est capable de générer. La bande lumineuse peut être allumée en complément avec d'autres portions lumineuses de base pour former un faisceau d'éclairage et/ou de signalisation.

Le faisceau émis par la troisième LED 93 comprend également une autre partie de faisceau, encore appelée troisième faisceau secondaire 232. Celui-ci part en dehors du troisième guide primaire 231 et vers la gauche. Le troisième faisceau secondaire 232 entre dans le deuxième guide primaire 22 et traverse transversalement celui-ci. Il sort ensuit du deuxième guide primaire 22 via son bord latéral gauche 226, traverse également par réfraction le premier guide primaire 21, et se dirige ensuite vers la zone focale F.

Le troisième faisceau secondaire 232 est donc imagé par l'ensemble de projection 4. Son image est illustrée sur la figure 5A. Il s'agit d'une tâche 29 ayant une forme irrégulière, située sur le côté droit des deuxième et troisième unités d'illumination 224 et 234 sur la figure 5A.

Pour faciliter l'identification, une flèche N présentée pour montrer la correspondance entre le troisième faisceau secondaire 232 et son image sur écran-la figure 5A.

Le troisième faisceau secondaire 232 est aussi considéré comme un faisceau de rayons lumineux parasites.

La présence des tâches de lumière 28 et 29 issues du deuxième faisceau secondaire 222 et du troisième faisceau secondaire 232 nuit à la qualité du faisceau généré par le module lumineux portant cette pièce optique 8.

En effet, ces tâches 28 et 29 peuvent apporter un surplus d'intensité lumineuse des unités d'illumination propres à des guides voisins, c'est-à-dire des unités qui sont générées par des guides situées de part et d'autre du deuxième guide primaire 22 et/ou du troisième guide primaire 23. Ainsi, la valeur de l'intensité lumineuse, mesurée à l'endroit où il y a la superposition de ces tâches 28 et 29 avec l'unité d'illumination, génère un inconfort visuel.

Par ailleurs, ces tâches de lumière 28, 29 empêchent l'extinction totale des unités d'illuminations formées par les guides de lumière voisins. En effet, lorsque les sources de lumière disposées en vis-à-vis des guides voisins sont éteintes, les unités d'illumination correspondantes sont également éteintes. Cependant, si les deuxième et troisième LED 92 et 93 restent allumées, les faisceaux de rayons parasites 222, 232 persistent. Ainsi, les tâches de lumière 28, 29 restent allumées à l'emplacement des unités d'illumination des guides voisins qui sont pourtant éteintes.

De plus, ces tâches de lumière 28, 29 peuvent être situées dans une zone où on ne souhaite pas avoir de la lumière, notamment à l'endroit où se trouve un autre véhicule suivi ou venant en sens inverse. On peut donc avoir de la lumière résiduelle qui peut être éblouissante pour un conducteur venant en face ou du véhicule suivi.

Au vu de ces effets néfastes causés par les rayons parasites, la demanderesse propose un module lumineux 1 comme illustré sur les figures 1 à 4 et 6 et décrit précédemment. Bien entendu, il s'agit d'un mode de réalisation parmi tant d'autres possibles tout en restant dans le cadre de l'invention.

Les figures 6, 6A et 6B décrites ci-après permettent de mieux comprendre le fonctionnement et l'avantage du module lumineux selon l'invention précédemment décrit.

Par rapport à la pièce optique 8 de la figure 5, la pièce optique 7 de la figure 6 comprend en plus le premier guide secondaire 31 et le deuxième guide secondaire 32.

La pièce optique 7 de la figure 6 comprend toujours les deuxième et troisième LED 92 et 93, les mêmes guides primaires 21 à 24 que ceux de la figure 5. Les deuxième et troisième guides primaires 22 et 23 forment aussi respectivement les deuxième et troisième unités d'illumination 224 et 234.

Comme dans le cas précédent, la deuxième unité d'illumination 224 se trouve à droite sur les figures 6A et 6B tandis que la troisième unité d'illumination 234 se trouve à gauche sur les mêmes figures.

En ce qui concerne le premier guide secondaire 31, celui-ci réceptionne des rayons lumineux partant de la deuxième LED 92 vers la droite par rapport au sens d'émission de la lumière, qui est, ici, également la droite de la figure 6. Précisément, le premier guide secondaire 31 reçoit, ici, le deuxième faisceau secondaire 222 émis par la deuxième LED 92.

Les faces latérales 315 du premier guide secondaire 31 sont courbées pour augmenter l'effet de déviation des rayons. A l'intérieur du premier guide secondaire 31, les rayons du deuxième faisceau secondaire 222 effectuent de multiples réflexions de manière à ce qu'en sortant dudit premier guide 31, les rayons soient multidirectionnels et ne forment donc pas un faisceau collimaté. Par conséquent, l'image des rayons lumineux sortant du premier guide secondaire 31 est étalée dans l'image du faisceau obtenue sur l'écran. Là où apparaissait la tâche 28 en figure 5B, désormais il n'apparait plus qu'une petite tâche 41 à intensité réduite.

Ainsi, le premier guide secondaire 31 réduit la concentration de la lumière parasite.

En ce qui concerne le deuxième guide secondaire 32, celui-ci réceptionne des rayons parasites qui se propagent vers la gauche par rapport au sens d'émission de la lumière, qui est, ici, également la gauche de la figure 6. Ici, le deuxième guide secondaire 32 reçoit des rayons émis par la troisième LED 93, ou précisément les rayons du troisième faisceau secondaire 232.

Les rayons dudit troisième faisceau secondaires 232 sont réfléchis à l'intérieur du deuxième guide secondaire 32 de sorte à former différentes parties de rayons listées ci-après.

Une première partie 326 de ces rayons est renvoyée vers le côté d'où ils proviennent, c'est-à-dire vers le troisième guide primaire 23.

Une deuxième autre partie 327 de ces rayons, comme présentée par la ligne K sur la figure 6, est écartée de l'endroit où ils impactaient précédemment la zone focale F, excentrée et déviée vers l'extérieur de la lentille secondaire 6. Ainsi, ils sont transmis par la lentille primaire 5 mais n'atteignent pas la face amont secondaire 62 de la lentille secondaire 6.

En effet, la face aval secondaire 61 forme l'organe de sortie. Une zone permettant aux rayons de l'atteindre est l'espace immédiatement avant la face aval secondaire 61. Une autre zone permettant d'atteindre la face aval secondaire 61 est le passage par la face amont secondaire 62. Ici, la deuxième partie 327 des rayons parasites sont déviés à côté de la face amont secondaire 62.

Ainsi, les rayons de ladite partie 327 n'entrent pas dans la lentille secondaire 6, ils ne sont donc pas imagés dans le champ de projection de l'ensemble de projection 4.

Une troisième partie 328 des rayons effectuent une multitude de réflexions dans le deuxième guide secondaire 32 de manière à ce que leur image soit étalée sur écran.

Au final, il y a de très peu de rayons sortant du deuxième guide secondaire 32 qui peuvent être imagés par l'ensemble de projection 4 de façon à produire une image d'intensité suffisante pour être décelable sur l'écran. La minorité des rayons imagés forment de toutes petites tâches 42 à faible intensité sur l'écran. Ces tâches sont représentées sur la figure 6A.

Le deuxième guide secondaire 32 limite ou empêche donc la formation des images parasites notables dans l'image du faisceau généré par le module lumineux 1.

Ainsi, grâce aux premier et deuxième guides secondaires 31 et 32, le module lumineux 1 selon l'invention et selon l'exemple décrit ci-dessus génère un faisceau lumineux présentant de très légères images parasites, voire un faisceau lumineux exempt d'images parasites. Le faisceau lumineux généré par un tel module lumineux a donc une qualité améliorée, ce qui procure une meilleure visibilité au conducteur.

Bien entendu, il est possible d'apporter à l'invention de nombreuses modifications sans pour autant sortir du cadre de celle-ci.

On peut avoir dans un module uniquement un ou plusieurs guide(s) secondaire(s) sur un bord ou uniquement un ou plusieurs guide(s) secondaire(s) entre 2 guides primaires ou encore un ou plusieurs guide(s) secondaire(s) de chaque type.

Les faces latérales des guides secondaires peuvent être planes, concaves ou convexes selon les déviations recherchées, qu'ils soient en extrémité ou entre les guides primaires.

Les bords libres des guides secondaires peuvent être au moins en partie coplanaires avec les surfaces d'entrée des guides primaires ou avoir des formes différentes.

Les guides secondaires peuvent être plus longs ou plus courts que les guides primaires, qu'ils soient en extrémité ou entre les guides primaires.

## Revendications

1. Module lumineux (1) de véhicule, destiné à générer un faisceau lumineux suivant un axe optique (I), comprenant :
- des guides de lumière primaires (2, 21, 22, 23, 24) comprenant chacun un dioptre d'entrée (20, 220, 230) et une sortie (29) ;
- une source lumineuse (9, 92, 93) agencée en vis-à-vis d'un dioptre d'entrée (20, 220, 230);
- un ensemble de projection (4, 5,6) comprenant une zone focale (F) et un organe de sortie (61), ledit ensemble de projection étant agencé de manière à ce que les rayons lumineux passant par ladite zone focale (F) et atteignant l'organe de sortie soient imagés dans un champ de projection en aval dudit ensemble de projection ;
- les sorties (29, 39) des guides étant agencées au niveau de la zone focale (F) ;
ledit module lumineux (1) étant **caractérisé en ce qu'**il comprend au moins un guide de lumière secondaire (3, 31, 32) distinct des guides de lumière primaires (2, 21, 22, 23, 24), et agencé de manière à dévier des rayons lumineux issus de la source lumineuse de manière à ce qu'ils n'atteignent pas l'organe de sortie (61), et/ou de manière à étaler lesdits rayons lumineux dans ledit champ de projection, le ou les guides de lumière secondaires (3, 31, 32) étant conçus pour réfracter et dévier uniquement des rayons lumineux parasites, des rayons lumineux parasites étant des rayons issus d'une source lumineuse (9, 92, 93) disposée en amont d'un guide de lumière primaire (2, 21, 22, 23, 24), mais qui ne rentrent pas dans ledit guide de lumière primaire (2, 21, 22, 23, 24), ou qui en sortent par une des faces latérales avant d'avoir atteint la sortie de ce guide primaire (2, 21, 22, 23, 24).

2. Module lumineux (1) selon la revendication 1, **caractérisé en ce que** chaque guide de lumière secondaire (3, 31, 32) comprend une extrémité libre en regard de laquelle aucune source lumineuse n'est disposée.

3. Module lumineux (1) selon la revendication 1, **caractérisé en ce qu'**il est agencé de manière à ce que l'image des sorties des guides primaires (2, 21, 22, 23, 24) associée à la source lumineuse (9, 92, 93) forme une bande lumineuse dans le champ de projection, ladite bande lumineuse formant une portion d'un faisceau d'éclairage.

4. Module lumineux (1) selon la revendication 1 ou selon la revendication 2, **caractérisé en ce que** les guides de lumière primaires (2, 21, 22, 23, 24) et le ou les guides de lumière secondaires (3, 31, 32) sont disposés dans une même rangée horizontale (11), **en ce que** le ou au moins un des guides de lumière secondaires (31), dit premier guide de lumière secondaire (31), est placé entre deux guides de lumière primaires (23, 24).

5. Module lumineux (1) selon l'une quelconque des revendications précédentes, **caractérisé en ce que** les guides de lumière primaires (2, 21, 22, 23, 24) et le ou les guides de lumière secondaires (3, 31, 32) sont disposés dans une même rangée horizontale (11), **en ce que** le ou au moins un des guides de lumière secondaires (32), dit deuxième guide de lumière secondaire (32), est placé à une extrémité (111) de ladite rangée horizontale (11).

6. Module lumineux (1) selon l'une des revendications 1 à 4, **caractérisé en ce qu'**au moins un guide de lumière secondaire (31) s'étend longitudinalement selon un premier axe (I1) sensiblement parallèle à l'axe optique (I) du module, et **en ce que** ledit au moins un guide de lumière secondaire (31) comprend des faces latérales (315) légèrement courbées vers l'intérieur en direction du premier axe (I1).

7. Module lumineux (1) selon l'une des revendications précédentes, **caractérisé en ce qu'**au moins un guide de lumière secondaire (31) comprend deux faces latérales (315) opposées et concaves, vu de l'extérieure dudit premier guide.

8. Module lumineux (1) selon l'une des revendications précédentes, **caractérisé en ce qu'**au moins un guide de lumière secondaire (32) comprend des faces latérales (325) planes.

9. Module lumineux (1) selon l'une des revendications précédentes, **caractérisé en ce qu'**au moins un guide de lumière secondaire (31) comprend une première entrée comportant une extrémité libre (310) agencée sensiblement dans un même plan qu'au moins certains dioptres d'entrée (20) des guides de lumière primaires (2, 21, 22, 23, 24).

10. Module lumineux (1) selon l'une des revendications précédentes, **caractérisé en ce qu'**au moins un guide de lumière secondaire (32) comprend une extrémité libre (320) agencée de manière décalée longitudinalement par rapport à au moins certains des dioptres d'entrée (20) des guides de lumière primaires (2, 21, 22, 23, 24).

11. Module lumineux (1) selon l'une quelconque des revendications 1 à 9, **caractérisé en ce que** l'ensemble de projection (4) comprend une lentille primaire (5) et une lentille secondaire (6) disposée à distance et en aval de ladite lentille primaire (5), la lentille primaire (5) recevant les rayons sortant des sorties des guides de lumière primaires (2, 21, 22, 23, 24) et les rayons sortant de la sortie du guide de lumière secondaire ou sortant des sorties des guides de lumière secondaires (3, 31, 32) et les envoyant vers la lentille secondaire (6).

12. Module lumineux (1) selon la revendication précédente, **caractérisé en ce que** la lentille primaire (5), les guides de lumière primaire (2, 21, 22, 23, 24) et le ou les guides de lumière secondaires (3, 31, 32) sont venus de matière de manière à former une pièce optique (7) monobloc.

13. Module lumineux (1) de véhicule selon l'une quelconque des revendications 1 à 9, **caractérisé en ce que** l'ensemble de projection est composé d'une seule lentille convergeant au niveau de la zone focale de manière à imager les sorties des guides de lumière primaires, et **en ce que** l'ensemble de projection, les guides de lumière primaires et les guides de lumière secondaires sont venus de matière en une seule pièce.

14. Module lumineux (1) de véhicule selon l'une quelconque des revendications précédentes, **caractérisé en ce qu'**il comprend plusieurs sources lumineuses (9, 92, 93), lesdites sources lumineuses (9, 92, 93) étant agencées en vis-à-vis des dioptres d'entrée (20) de tout ou partie des guides de lumière primaires (2, 21, 22, 23, 24) .

15. Dispositif d'éclairage de véhicule, **caractérisé en ce qu'**il comprend un module lumineux (1) selon l'une quelconque des revendications précédentes.

## Patentansprüche

1. Fahrzeug-Leuchtmodul (1), das dazu bestimmt ist, ein Lichtbündel gemäß einer optischen Achse (I) zu erzeugen, das enthält:
- Primärlichtleiter (2, 21, 22, 23, 24), die je ein Eingangsdiopter (20, 220, 230) und einen Ausgang (29) enthalten;
- eine gegenüber einem Eingangsdiopter (20, 220, 230) eingerichtete Lichtquelle (9, 92, 93);
- eine Projektionseinheit (4, 5,6), die eine Fokalzone (F) und ein Ausgangselement (61) enthält, wobei die Projektionseinheit so eingerichtet ist, dass die die Fokalzone (F) durchquerenden und das Ausgangselement erreichenden Lichtstrahlen in einem Projektionsfeld stromabwärts hinter der Projektionseinheit abgebildet werden;
- wobei die Ausgänge (29, 39) der Leiter im Bereich der Fokalzone (F) eingerichtet sind;
wobei das Leuchtmodul (1) **dadurch gekennzeichnet ist, dass** es mindestens einen Sekundärlichtleiter (3, 31, 32) enthält, der sich von den Primärlichtleitern (2, 21, 22, 23, 24) unterscheidet und so eingerichtet ist, dass er von der Lichtquelle stammende Lichtstrahlen derart umlenkt, dass sie das Ausgangselement (61) nicht erreichen, und/oder derart, dass die Lichtstrahlen im Projektionsfeld ausgebreitet werden, wobei der oder die Sekundärlichtleiter (3, 31, 32) konzipiert ist/sind, nur Streulichtstrahlen zu brechen und umzulenken, wobei Streulichtstrahlen Strahlen sind, die von einer Lichtquelle (9, 92, 93) stammen, die stromaufwärts vor einem Primärlichtleiter (2, 21, 22, 23, 24) angeordnet ist, aber nicht in den Primärlichtleiter (2, 21, 22, 23, 24) eintreten, oder die aus ihm über eine der Seitenflächen austreten, ehe sie den Ausgang dieses Primärleiters (2, 21, 22, 23, 24) erreicht haben.

2. Leuchtmodul (1) nach Anspruch 1, **dadurch gekennzeichnet, dass** jeder Sekundärlichtleiter (3, 31, 32) ein freies Ende enthält, dem gegenüber keine Lichtquelle angeordnet ist.

3. Leuchtmodul (1) nach Anspruch 1, **dadurch gekennzeichnet, dass** es so eingerichtet ist, dass das Bild der Ausgänge der Primärleiter (2, 21, 22, 23, 24), das der Lichtquelle (9, 92, 93) zugeordnet ist, einen Lichtstreifen im Projektionsfeld bildet, wobei der Lichtstreifen einen Abschnitt eines Beleuchtungsbündels bildet.

4. Leuchtmodul (1) nach Anspruch 1 oder nach Anspruch 2, **dadurch gekennzeichnet, dass** die Primärlichtleiter (2, 21, 22, 23, 24) und der oder die Sekundärlichtleiter (3, 31, 32) in einer gleichen waagrechten Reihe (11) angeordnet sind, dass der oder mindestens einer der Sekundärlichtleiter (31), erster Sekundärlichtleiter (31) genannt, zwischen zwei Primärlichtleitern (23, 24) platziert ist.

5. Leuchtmodul (1) nach einem der vorhergehenden Ansprüche, **dadurch gekennzeichnet, dass** die Primärlichtleiter (2, 21, 22, 23, 24) und der oder die Sekundärlichtleiter (3, 31, 32) in einer gleichen waagrechten Reihe (11) angeordnet sind, dass der oder mindestens einer der Sekundärlichtleiter (32), zweiter Sekundärlichtleiter (32) genannt, an einem Ende (111) der waagrechten Reihe (11) platziert ist.

6. Leuchtmodul (1) nach einem der Ansprüche 1 bis 4, **dadurch gekennzeichnet, dass** mindestens ein Sekundärlichtleiter (31) sich längs gemäß einer ersten Achse (11) im Wesentlichen parallel zur optischen Achse (I) des Moduls erstreckt, und dass der mindestens eine Sekundärlichtleiter (31) Seitenflächen (315) enthält, die in Richtung der ersten Achse (11) leicht nach innen gekrümmt sind.

7. Leuchtmodul (1) nach einem der vorhergehenden Ansprüche, **dadurch gekennzeichnet, dass** mindestens ein Sekundärlichtleiter (31) von außerhalb des ersten Leiters gesehen zwei gegenüberliegende und konkave Seitenflächen (315) enthält.

8. Leuchtmodul (1) nach einem der vorhergehenden Ansprüche, **dadurch gekennzeichnet, dass** mindestens ein Sekundärlichtleiter (32) ebene Seitenflächen (325) enthält.

9. Leuchtmodul (1) nach einem der vorhergehenden Ansprüche, **dadurch gekennzeichnet, dass** mindestens ein Sekundärlichtleiter (31) einen ersten Eingang enthält, der ein freies Ende (310) aufweist, das im Wesentlichen in einer gleichen Ebene wie mindestens bestimmte Eingangsdiopter (20) der Primärlichtleiter (2, 21, 22, 23, 24) eingerichtet ist.

10. Leuchtmodul (1) nach einem der vorhergehenden Ansprüche, **dadurch gekennzeichnet, dass** mindestens ein Sekundärlichtleiter (32) ein freies Ende (320) enthält, das bezüglich mindestens bestimmter der Eingangsdiopter (20) der Primärlichtleiter (2, 21, 22, 23, 24) längs versetzt eingerichtet ist.

11. Leuchtmodul (1) nach einem der Ansprüche 1 bis 9, **dadurch gekennzeichnet, dass** die Projektionseinheit (4) eine Primärlinse (5) und eine Sekundärlinse (6) enthält, die in Abstand und stromabwärts hinter der Primärlinse (5) angeordnet ist, wobei die Primärlinse (5) die aus den Ausgängen der Primärlichtleiter (2, 21, 22, 23, 24) stammenden Strahlen und die aus dem Ausgang des Sekundärlichtleiters austretenden oder aus den Ausgängen der Sekundärlichtleiter (3, 31, 32) austretenden Strahlen empfängt und sie zur Sekundärlinse (6) schickt.

12. Leuchtmodul (1) nach dem vorhergehenden Anspruch, **dadurch gekennzeichnet, dass** die Primärlinse (5), die Primärlichtleiter (2, 21, 22, 23, 24) und der oder die Sekundärlichtleiter (3, 31, 32) aus dem gleichen Material bestehen, um ein einstückiges optisches Bauteil (7) zu bilden.

13. Fahrzeug-Leuchtmodul (1) nach einem der Ansprüche 1 bis 9, **dadurch gekennzeichnet, dass** die Projektionseinheit aus einer einzigen Linse besteht, die im Bereich der Fokalzone konvergiert, um die Ausgänge der Primärlichtleiter abzubilden, und dass die Projektionseinheit, die Primärlichtleiter und die Sekundärlichtleiter aus dem gleichen Material in einem einzigen Bauteil bestehen.

14. Fahrzeug-Leuchtmodul (1) nach einem der vorhergehenden Ansprüche, **dadurch gekennzeichnet, dass** es mehrere Lichtquellen (9, 92, 93) enthält, wobei die Lichtquellen (9, 92, 93) gegenüber den Eingangsdioptern (20) aller oder eines Teils der Primärlichtleiter (2, 21, 22, 23, 24) eingerichtet sind.

15. Fahrzeugbeleuchtungsvorrichtung, **dadurch gekennzeichnet, dass** sie ein Leuchtmodul (1) nach einem der vorhergehenden Ansprüche enthält.

## Claims

1. A vehicle luminous module (1) intended to generate a light beam along an optical axis (I), and comprising:
- primary light guides (2, 21, 22, 23, 24) each comprising an entrance dioptric interface (20, 220, 230) and an exit (29);
- a light source (9, 92, 93) arranged facing an entrance dioptric interface (20, 220, 230);
- a projecting assembly (4, 5, 6) comprising a focal region (F) and an exit member (61), said projecting assembly being arranged so that the light rays passing through said focal region (F) and reaching the exit member are imaged in a projection field downstream of said projecting assembly;
- the exits (29, 39) of the guides being arranged level with the focal region (F);
said luminous module (1) being **characterized in that** it comprises at least one secondary light guide (3, 31, 32) distinct from the primary light guides (2, 21, 22, 23, 24), and arranged so as to deviate light rays generated by the light source so that they do not reach the exit member (61), and/or so as to spread said light rays in said projection field, the secondary light guide or the secondary light guides (3, 31, 32) being only designed to refract and deviate stray light rays, stray light rays being rays that are generated by a light source (9, 92, 93) placed upstream of a primary light guide (2, 21, 22, 23, 24) but that do not enter into said primary light guide (2, 21, 22, 23, 24), or that exit via one of the lateral faces of this primary guide before reaching its exit.

2. The luminous module (1) as claimed in claim 1, **characterized in that** each secondary light guide (3, 31, 32) comprises a free end facing which no light source is placed.

3. The luminous module (1) as claimed in claim 1, **characterized in that** it is arranged so that the image of the exits of the primary guides (2, 21, 22, 23, 24) associated with the light source (9, 92, 93) forms a strip of light in the projection field, said strip of light forming a segment of a lighting beam.

4. The luminous module (1) as claimed in claim 1 or as claimed in claim 2, **characterized in that** the primary light guides (2, 21, 22, 23, 24) and the one or more secondary light guides (3, 31, 32) are placed in the same horizontal row (11), and **in that** the or at least one of the secondary light guides (31), which is called the first secondary light guide (31), is placed between two primary light guides (23, 24).

5. The luminous module (1) as claimed in any one of the preceding claims, **characterized in that** the primary light guides (2, 21, 22, 23, 24) and the one or more secondary light guides (3, 31, 32) are placed in the same horizontal row (11), and **in that** the or at least one of the secondary light guides (32), which is called the second secondary light guide (32), is placed at one end (111) of said horizontal row (11).

6. The luminous module (1) as claimed in one of claims 1 to 4, **characterized in that** at least one secondary light guide (31) extends longitudinally along a first axis (II) substantially parallel to the optical axis (I) of the module, and **in that** said at least one secondary light guide (31) comprises lateral faces (315) that are slightly curved inward in the direction of the first axis (II).

7. The luminous module (1) as claimed in one of the preceding claims, **characterized in that** at least one secondary light guide (31) comprises two opposite lateral faces (315) that are concave when viewed from outside said first guide.

8. The luminous module (1) as claimed in one of the preceding claims, **characterized in that** at least one secondary light guide (32) comprises planar lateral faces (325).

9. The luminous module (1) as claimed in one of the preceding claims, **characterized in that** at least one secondary light guide (31) comprises a first entrance comprising a free end (310) that is arranged substantially in the same plane as at least certain entrance dioptric interfaces (20) of the primary light guides (2, 21, 22, 23, 24) .

10. The luminous module (1) as claimed in one of the preceding claims, **characterized in that** at least one secondary light guide (32) comprises a free end (320) that is offset longitudinally with respect to at least certain of the entrance dioptric interfaces (20) of the primary light guides (2, 21, 22, 23, 24).

11. The luminous module (1) as claimed in any one of claims 1 to 9, **characterized in that** the projecting assembly (4) comprises a primary lens (5) and a secondary lens (6) that is placed away from and downstream of said primary lens (5), the primary lens (5) receiving the rays that exit from the exits of the primary light guides (2, 21, 22, 23, 24) and the rays that exit from the exit of the secondary light guide or that exit from the exits of the secondary light guides (3, 31, 32) and sending them to the secondary lens (6).

12. The luminous module (1) as claimed in the preceding claim, **characterized in that** the primary lens (5), the primary light guides (2, 21, 22, 23, 24) and the one or more secondary light guides (3, 31, 32) are made of the same material and integrally formed so as to form a one-piece optical part (7).

13. The vehicle luminous module (1) as claimed in any one of claims 1 to 9, **characterized in that** the projecting assembly is composed of a single lens that converges level with the focal region so as to image the exits of the primary light guides, and **in that** the projecting assembly, the primary light guides and the secondary light guides are made of the same material and integrally formed into a single part.

14. The vehicle luminous module (1) as claimed in any one of the preceding claims, **characterized in that** it comprises a plurality of light sources (9, 92, 93), said light sources (9, 92, 93) being arranged facing the entrance dioptric interfaces (20) of all or some of the primary light guides (2, 21, 22, 23, 24).

15. A vehicle lighting device, **characterized in that** it comprises a luminous module (1) as claimed in any one of the preceding claims.
